Europäisches Patentamt

European Patent Office

Office européen des brevets

(11) Publication number: **0 227 350**
**A2**

(12) # EUROPEAN PATENT APPLICATION

(21) Application number: **86309429.8**

(51) Int. Cl.⁴: **G01N 23/02**

(22) Date of filing: **03.12.86**

(30) Priority: **03.12.85 GB 8529722**

(43) Date of publication of application:
**01.07.87 Bulletin 87/27**

(84) Designated Contracting States:
**AT BE CH DE ES FR GR IT LI LU NL SE**

(71) Applicant: **BICC Public Limited Company**
**Devonshire House Mayfair Place**
**London W1X 5FH(GB)**

(72) Inventor: **Shuttleworth, Ernest Paul**
**2 Clive Court Fortune Gate Road**
**London NW10(GB)**
Inventor: **Bhattacharya, Sabyasachi, Dr.**
**34 Montefiore Court Stamford Hill**
**London N16 5TY(GB)**

(74) Representative: **Gadsden, Robert Edward et al**
**BICC Group Patents Department BICC**
**Research & Engineering Limited 38 Ariel**
**Way Wood Lane**
**London W12 7DX(GB)**

(54) **Monitoring of conductors in cable.**

(57) The configuration of conductors (4) in a ribbon cable (3) is monitored by illuminating the cable with a beam of photons (2) from a photon source (1) such as a radioactive source or x-ray generator. One or more photon detectors such as a fluorescent screen (6) detect the photon beam emerging from the cable, and provides an output signal for electronic processing means (9) to determine the position of the conductors, their separation, the number of conductors present and their size. The position of each of the conductors (4) may be identified from the output signal from the screen (6) by means of threshold detection, gradient detection, or pattern matching.

Fig. 1.

## MONITORING OF CONDUCTORS IN CABLE

This invention relates to the determination of the configuration of the conductors in a ribbon cable. By the term 'configuration of the conductors' is herein meant to include the position of conductors within the ribbon cable, the size of the conductors, the number of conductors present, or the spacing between two or more conductors of the cable.

Ribbon cable consists of a plurality of electric conductors contained within a sheath of electrically insulating material. Often connectors are terminated on to ribbon cable using insulation piercing contacts, which require the spacing between the conductors of the ribbon cable to be consistent. This is especially so where the contacts are inserted automatically.

Some idea of the spacing of the conductors can be obtained by measuring the thickness of the ribbon cable with width measuring means. One known optical system measures the profile of the cable and can be used to estimate the positions of the conductors. This invention provides an improved technique for determining the configuration of conductors in a ribbon cable.

Accordingly, a method of determining the configuration of the conductors in a ribbon cable comprises illuminating one or more of the conductors with a beam of photons from a photon source; detecting the photon beam emerging from the ribbon cable at least from the one or more conductors with one or more photon detectors; and calculating, from the output of the one or more photon detectors, the configuration of the conductors of the ribbon cable with electronic processing means. The term "photons" is hereby meant to include all types of penetrating radiation such as gamma rays and low energy x-rays which are capable of passing through the insulating sheath of the cable, and to a lesser extent, the conductors of the cable. The term may conceivably also include a light beam of sufficient intensity to pass through the insulating sheath of the cable, at least to a discernable extent.

The photon beam is preferably detected emerging from at least two of the conductors and continuously therebetween. This may preferably be by means of a photon-responsive screen, such as one formed of a fluorescent material. Signals from the fluorescent screen may be transferred by means of a fibre optic arrangement to an opto-electronic detector which converts the optical output from the screen into electronic signals for the processing means. Alternatively, the signals from the screen may be transferred to the opto-electronic detector by means of a lens arrangement.

In one arrangement the photon source is adapted to produce a diverging beam of photons to illuminate at least two of the conductors. Alternatively the photon source is adapted to produce a substantially collimated beam of photons which is caused to scan the cable to illuminate at least two of the conductors. With either of the above arrangements the photon beam is preferably caused to illuminate the entire width of the ribbon cable, such that all of the conductors contained therein are illuminated.

The radiation emerging from the cable will be in the form a series of peaks and troughs, the peaks of high transmission through the sheath material between the conductors, and the troughs of low transmission through the conductors themselves. Preferably the electronic processing means is adapted to calculate, from the output of the one or more photon detectors, the separation between two or more conductors of the cable. According to a preferred arrangement the electronic processing means determines threshold positions where the output of the one or more photon detectors crosses a predetermined reference level and calculates, by establishing the mean of adjacent threshold positions, the position of the two or more conductors. This threshold detection can be applied to establish the position of each of the conductors in the ribbon cable such that the spacing between any two of the conductors can be determined.

Alternatively, the electronic processing means samples the output of the one or more photon detectors, determines the gradient between adjacent samples and calculates, by establishing positions where the gradient is substantially zero, the position of the two or more conductors. In yet another alternative arrangement the electronic processing means is provided with a read only memory, in which is stored data indicative of the output of the one or more photon detectors on detecting the photon beam emerging from the ribbon cable at one of the conductors, the electronic processing means sampling the output from the one or more photon detectors and comparing the samples with the data stored in the read only memory to calculate the position of the two or more conductors. Other techniques in addition to threshold detection, gradient detection, or pattern matching may be employed without departing from the scope of the invention. Preferably the electronic processing means is a microprocessor.

The ribbon cable may conceivably be moving relative to the photon source and the one or more photon detectors. This enables the separation of the conductors to be determined on-line, such that cable being manufactured may be monitored. This allows corrective action to be carried out promptly and effectively should the monitoring establish that unacceptable cable is being produced.

The photon source is preferably a radioactive source producing gamma rays. Alternatively the source may be a low intensity x-ray generator, preferably operating from a DC potential.

The invention further resides in apparatus for carrying out the above described method of determining the configuration of the conductors in a ribbon cable. In particular apparatus for determining the configuration of conductors in a ribbon cable comprises a photon source for producing a beam of photons adapted to be caused to illuminate one or more of the conductors; one or more photon detectors positioned on the opposite side of the ribbon cable to the photon source and capable of detecting the photon beam emerging from the ribbon cable at least from the one or more conductors; and electronic processing means connected to the one or more photon connectors and adapted to calculate, from the output of the one or more photon detectors, the configuration of the conductors of the ribbon cable.

The invention will now be further described, by way of example only, with reference to the accompanying drawings in which;

Figure 1 is a schematic diagram of apparatus for monitoring a ribbon cable, according to the invention; and

Figure 2 is a waveform showing a typical output from the apparatus of figure 1.

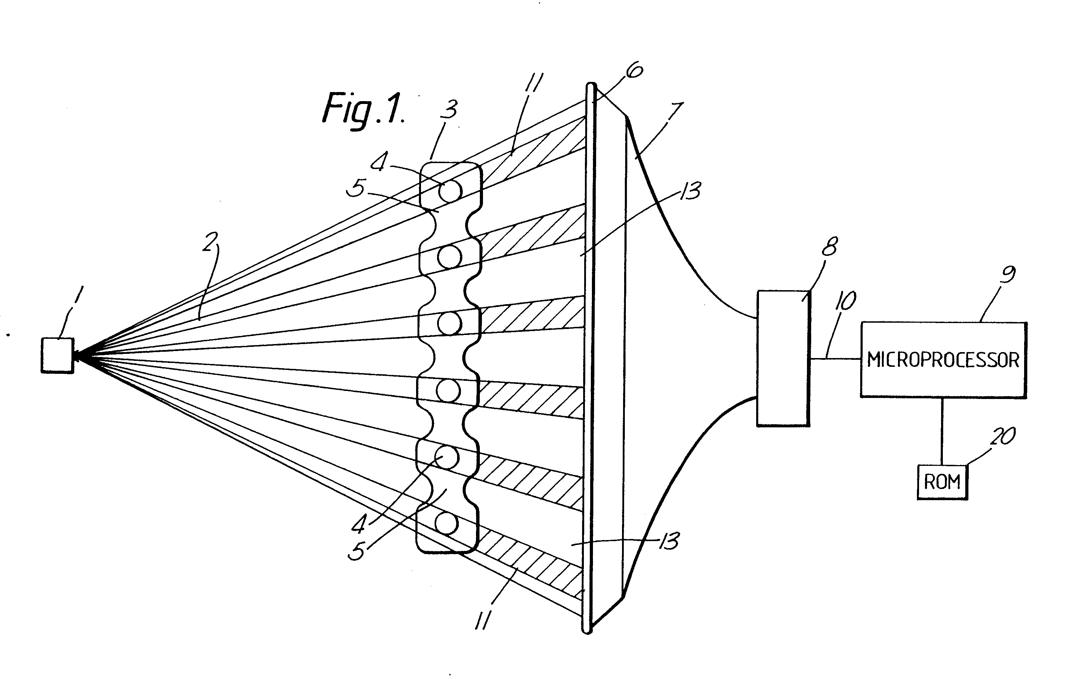

Referring to Figure 1, a photon source 1 such as a low intensity x-ray generator, produces a diverging beam of radiation shown generally at 2. The beam illuminates a ribbon cable 3 comprising six conductors 4 in a sheath 5 of insulating plastics material. Radiation emerging from the cable 3 impinges on a fluorescent screen, optical signals from which are transferred by means of a fibre optic reducer 7 to an opto-electronic converter 8. The converter 8 converts optical signals from the fibre optic reducer 7 into electronic signals which are fed to a microprocesor 9 by means of a line 10.

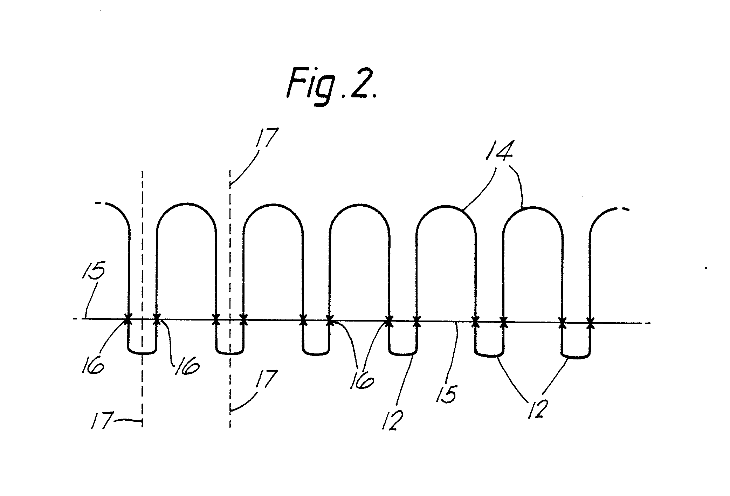

The beam 2 emerging from the cable 3 to be detected by the screen 6 will now be described with reference to Figure 2. Those parts of the beam which pass through both the sheath 5 and conductors 4 will produce areas of relatively low transmission. These are shown as the shaded areas 11 in Figure 1 and appear as troughs 12 in the output of the screen 6 as shown in Figure 2. Conversely those parts of the beam 2 which pass only through the sheath between the conductors will produce areas 13 of relatively high transmission producing peaks 14 in the output of the screen.

The microprocessor 9 therefore receives from the opto-electronic converter 8 a waveform consisting of a series of peaks and troughs as shown in Figure 2. The microprocessor converts the waveform into digital form and establishes threshold positions 16 where the waveform signal crosses a predetermined reference level 15. By calculating the mean of adjacent threshold positions 16 the microprocessor can estimate the location 17 of the centre of the conductors 4. Alternatively the microprocessor 9 compares the digital readings with data stored in Read only memory 20. The data stored in the memory 20 includes values for the output of the screen 6 where the beam passes through both the sheath 5 and conductors 4. By comparing the readings with the data in the Read only memory 20, the microprocessor 9 can estimate the location of the conductors 4. Whichever method is employed, the microprocessor 9 is able to calculate the spacing between adjacent conductors and, if desired, the spacing between any particular conductor and all of the others in the ribbon cable. In this way a conductor which is incorrectly positioned with respect to the other conductors within the cable can be identified.

Ribbon cable 3 is moved past the source 1, for example on a cable production line, to enable the continuous monitoring of the spacing of the conductors in the cable. In the event of any deviation in the pitch of the cable greater than a predetermined error threshold, the microprocessor can be made to activate an alarm, alerting an operator to the fact that unacceptable cable is being produced.

### Claims

1. A method of determining the configuration of the conductors (4) in a ribbon cable (3), characterised by the steps of illuminating one or more of the conductors (4) with a beam of photons (2) from a photon source (1); detecting the photon beam emerging from the ribbon cable (3) at least from the one or more conductors (4) with one or more photon detectors (6); and calculating, from the output of the one or more photon detectors (6), the configuration of the conductors (4) of the ribbon cable (3) with electronic processing means (9).

2. A method according to Claim 1 characterised by the step of detecting the photon beam - (2) emerging from at least two of the conductors - (4) and continuously therebetween.

3. A method according to Claim 1 or Claim 2 characterised by the step of calculating, with electronic processing means, the separation between two or more conductors of the cable, from the output of the one or more photon detectors.

4. A method according to Claim 3 characterised in that the electronic processing means (9) determines threshold positions where the output of the one or more photon detectors (6) crosses a predetermined reference level and calculates, by establishing the mean of adjacent threshold positions, the position of the two or more conductors - (4).

5. A method according to Claim 3 characterised in that the electronic processing means (9) samples the output of the one or more photon detectors (6), determines the gradient between adjacent samples and calculates, by establishing positions where the gradient is substantially zero, the position of the two or more conductors (4).

6. A method according to Claim 3 characterised in that the electronic processing means (9) is provided with a read only memory, in which is stored data indicative of the output of the one or more photon detectors (6) on detecting the photon beam (2) emerging from the ribbon cable (3) at one of the conductors (4), the electronic processing means (9) sampling the output from the one or more photon detectors, and comparing the sampled output values with the data stored in the read only memory to calculate the position of the two or more conductors (4).

7. A method according to any preceding claim characterised by the step of causing the ribbon cable to move relative to the photon source (1) and the one or more photon detectors (6).

8. Apparatus for determining the configuration of the conductors (4) in a ribbon cable (3), characterised in that it comprises a photon source (1) for producing a beam of photons (2) such as to illuminate one or more of the conductors (4); one or more photon detectors (6) positioned on the opposite side of the ribbon cable (3) to the photon source (1) and capable of detecting the photon beam (2) emerging from the ribbon cable at least from the one or more conductors (4); and electronic processing means (9) connected to the one or more photon detectors (6) and adapted to calculate, from the output of the one or more photon detectors, the configuration of the conductors of the ribbon cable (3).

9. Apparatus according to Claim 8 characterised in that the photon source (1) is a radioactive source emitting gamma-rays.

10. Apparatus according to Claim 8 or Claim 9 characterised in that the one or more photon detectors comprises a photon-responsive screen (6), adapted to detect the photon beam (2) emerging from the one or more conductors (4) and continuously therebetween.

Fig.1.

MICROPROCESSOR

ROM

Fig. 2.